Europäisches Patentamt

European Patent Office

Office européen des brevets

(11) Publication number : **0 468 911 A2**

# EUROPEAN PATENT APPLICATION

(21) Application number : **91480099.0**

(22) Date of filing : **02.07.91**

(51) Int. Cl.⁵ : **G06F 3/033**

(30) Priority : **27.07.90 US 558934**

(43) Date of publication of application :
**29.01.92 Bulletin 92/05**

(84) Designated Contracting States :
**DE FR GB**

(71) Applicant : **International Business Machines
Corporation
Old Orchard Road
Armonk, N.Y. 10504 (US)**

(72) Inventor : **Torres, Robert Joseph
6100 Meadowhill Drive
Colleyville, Texas 76034 (US)**
Inventor : **Griffin, David Lee
1521 Rockwood Drive
Keller, Texas 76248 (US)**
Inventor : **Fleming, Stephen S.
9803 West Valley Ranch, Ranch No. 1156
Irving, Texas 75063 (US)**

(74) Representative : **Tubiana, Max
Compagnie IBM France Département de
Propriété Intellectuelle
F-06610 La Gaude (FR)**

(54) **A method and system for performing direct manipulating of a source object in a computer system.**

(57)  Disclosed is a computer system user interface in which the relationship between the icon and the pointer is visually indicated during direct manipulation operations. During direct manipulation, a pointer is attached to a source object and the source object, with the pointer attached thereto is dragged to a target. When the source object reaches the target, the action to be performed is automatically indicated by the appearance of the pointer. If the user desires to alter the action to be performed, he or she may override the system and cause an alternative action to be performed.

EP 0 468 911 A2

## BACKGROUND OF THE INVENTION

### Field of the Invention

The present invention relates generally to computer system user interfaces, and more particularly to a method in windowed computer system user interface that gives the user visual feedback with respect to the pointer and icon during direct manipulation.

### Description of the Prior Art

Conventional user interfaces provide icons to represent objects. These icons may be directly manipulated in order to perform useful tasks. Direct manipulation is a set of standard techniques that lets a user handle electronic objects in ways similar to the way their corresponding objects are handled in the physical world. Direct manipulation is the electronic method of directly applying one or more actions to an object.

Most actions that can be performed on objects are done either by moving or copying them. The majority of direct manipulation operations use dragging techniques. A drag takes place when the mouse pointer is placed on the object and mouse button two is pressed and held down while the mouse is moved so that the pointer travels to a different location on the screen. The drag ends when mouse button two is released. Most dragging operations involve a source object and a target object. The source object for a direct manipulation operation is identified by the location of the mouse pointer when button two is pressed. The target is identified by the location of the mouse pointer when button two is released.

A move operation causes an object to be relocated. For example, dragging a document from one folder to another causes the document to be moved to the new folder. In a move operation, the object is removed from its original location and placed in a second location. A copy operation moves a copy of the object to a designated location. In the document and folder example, a copy operation would leave the document in the first folder while it inserted a copy of the document in the second folder.

In general, the target of the direct manipulation operation determines whether the operation is a move or a copy. A drag to a container icon normally represents a move operation. Examples of containers are file cabinets and folders. A drag to a device icon normally represents a copy operation. Devices include printers and mail out-baskets. However, the default move for copy behavior can be changed by the user during the operation. For example, pressing CTRL key while dragging an object forces the operation to be a copy; pressing the ALT key while dragging an object forces the operation to be a move.

Current implementations provide limited visual feedback to the user during direct manipulation operations. The feedback typically consists of creating a shadow box or other visual form to indicate that an object has been "grabbed". Conventional techniques provide no visual distinction between the type of direct manipulation action being performed. For example, a user does not have any feedback as to whether a direct manipulation will perform a move or a copy operation. The user must know the direct manipulation defaults.

### Summary of the Invention

In the present invention, during direct manipulation of a source object, a pointer is attached to the source object. The source object with the printer attached thereto is dragged to a target and the action to be taken is automatically indicated by the appearance of the pointer. If the user desires to alter the indicated action, then the user may override the indicated action and the overriding action is automatically indicated. When the user drops the source object on the target, the indicated or overriding action is automatically performed.

### Brief Description of the Drawings

Figure 1 is a pictorial view of a window.

Figure 2 is a pictorial view similar to Figure 1 in which a spreadsheet icon has been grabbed in preparation for a direct manipulation operation.

Figure 3 is a pictorial view similar to Figure 1 in which the spreadsheet icon has been placed on a folder icon to perform a move operation.

Figure 4 is a pictorial view similar to Figure 1 in which the spreadsheet icon has been placed on a printer icon to perform a copy operation.

Figure 5 is a pictorial view similar to Figure 1 in which the spreadsheet icon has been placed on a chart icon to perform a link operation.

Figure 6 is a pictorial view similar to Figure 3 in which the move operation has been manually overridden to perform a copy operation of the spreadsheet to the folder.

Figures 7A and 7B comprise a flow chart of a preferred software implementation of the present invention.

Figure 8 is a flowchart of a software implementation of the "calculate override action" routine of the present invention.

Figure 9 is a flowchart of a software implementation of the "calculate default action" routine of the present invention.

Figure 10 is a flowchart of a software implementation of the "draw pointer" routine of the present invention.

## Description of the Preferred Embodiment

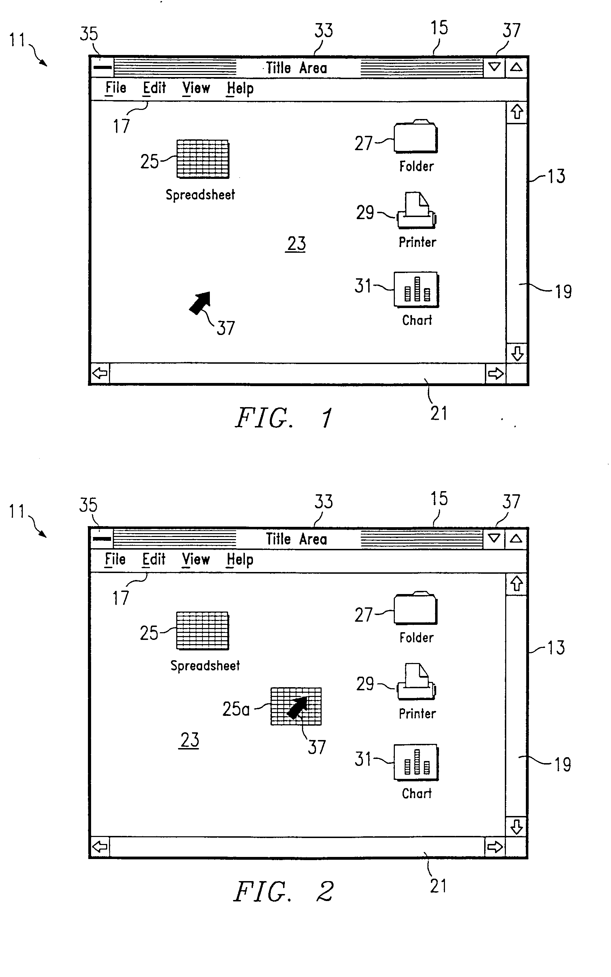

Referring now to the drawing, and first to Figure 1, a window is designated generally by the numeral 11. Window 11 includes a border or frame 13 that forms the outer boundary of the window. Contained within border 13 are a title bar 15, an action bar 17, and scroll bars 19 and 21. The remainder of window 11 consists of a client area 23, which is populated with a plurality of icons, including a spreadsheet icon 25, a folder icon 27, a printer icon 29, and a chart icon 31. Also located within client area 23 is a pointer 37 that the user can manipulate by means of a mouse or the like.

Title bar 15 includes a window title 33, which identifies the window, a system menu icon 35, and window sizing icons 37. System menu icon 35 allows the user to display a pull-down menu containing actions that the user can perform on the window. Such actions are related to the window itself and not to the object that is displayed in the window. For example, actions include all MOVE, which allows the user to reposition the window on the screen, MINIMIZE, which reduces the size of the window, MAXIMIZE, which enlarges the window to the size of the screen. Widow sizing icons 29 provide a fast way to use a mouse or pointing device to perform the actions of MINIMIZE and MAXIMIZE without requiring a menu.

Action bar 17 contains a list of the actions of the applications shown in the window. Each action in the list in the action bar has an associated pull-down menu that lists the individual actions that are contained within each general action listed in action bar 17. For example, the FILE pull-down enables the user to work with files through actions that manipulate the file as a whole.

Scroll bars 19 and 21 allow the user, in effect, to move window frame 13 to view parts of client area 23 that are located outside frame 13.

Referring now to Figure 2, the user has dragged spreadsheet icon 25 to the middle of client area 23. The drag operation is performed by placing pointer 37 on spreadsheet icon 25 and depressing mouse button number two (not shown) and moving the mouse with mouse button two depressed. During the drag, spreadsheet icon 25 remains in its original position, and a representation 25A of spreadsheet icon 25 with pointer 37 attached thereto is moved about the screen. The user can directly manipulate spreadsheet 25 to move it to folder 27, copy it with printer 29, or create a two way link between 25 and chart 31.

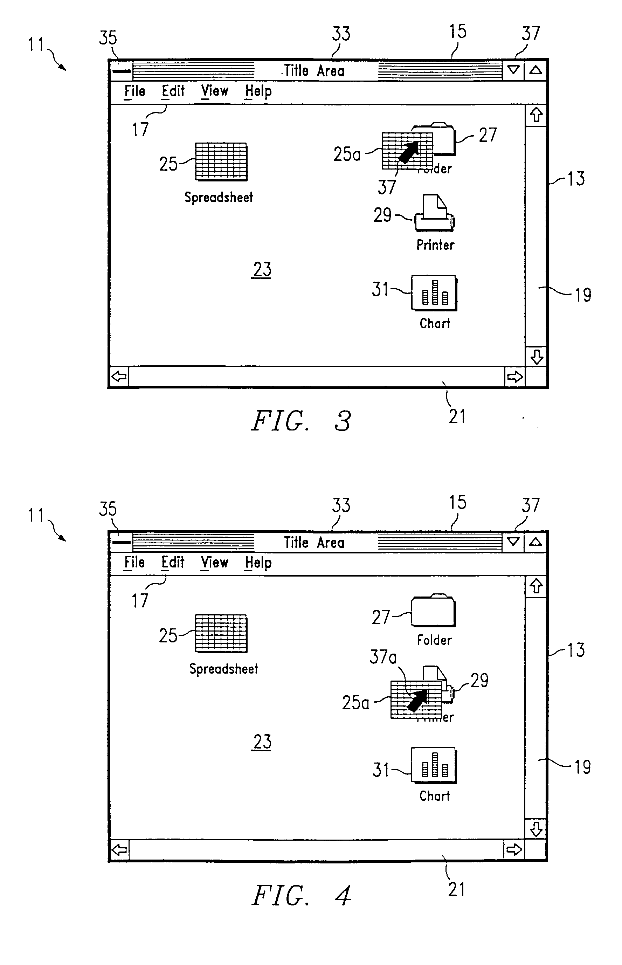

Referring now to Figure 3, spreadsheet icon 25A is shown positioned over folder icon 27. The default action of a spreadsheet object over a folder container is a move and that action is indicated by the appearance of pointer 37. In the preferred embodiment of the invention, the "move" pointer has the same appearance as the "normal" pointer as shown in Figure 1. If mouse button two were released, the spreadsheet represented by icon 25 would be moved to folder 27 and spreadsheet 25 would disappear from client area 23.

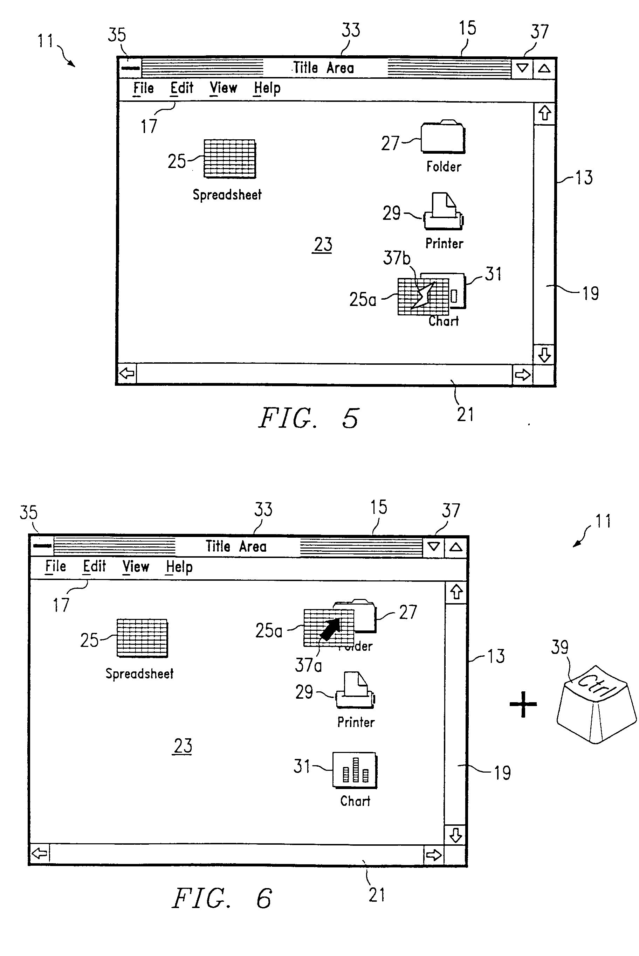

However, while the default action of a direct manipulation of a spreadsheet to a folder is a move, a spreadsheet may be copied to a folder. Thus, referring to Figure 6, if the user desires to perform a copy rather than move operation, he or she may override the indicated operation by depressing the control key 39. When control key 39 is depressed, the pointer changes its appearance, as indicated at 37A. Pointer 37A provides visual feedback to the user that a copy operation will be performed. If the user releases mouse button two, a copy of spreadsheet 25 will be placed in folder 27 and spreadsheet 25 will remain visible in client area 23 for further use.

Referring now to Figure 4, spreadsheet icon 25A is shown positioned over printer icon 29. The appearance of pointer 37A indicates that the default action of spreadsheet 25 on printer 29 is a copy. If mouse button two were released, a hardcopy of spreadsheet 25 would be printed at some physical device and spreadsheet 25 would remain in the client area. However, the user could force a move operation to take place by depressing the ALT key, in which case the appearance of pointer 37A would change to that of pointer 37, as in Figures 1-3. A move operation would cause the contents of spreadsheet 25 to be printed in hardcopy and deleted from storage.

Referring now to Figure 5, spreadsheet icon 25A is shown positioned over chart icon 31. The default action of direct manipulation of a spreadsheet to a chart is a link. A link creates a two way link between the chart and the spreadsheet such that changing values in the spreadsheet are automatically reflected in the chart. Similarly, adjustment of the chart values are automatically reflected in the spreadsheet. The link action is indicated by the appearance of pointer 37B. Releasing mouse button two would establish the link.

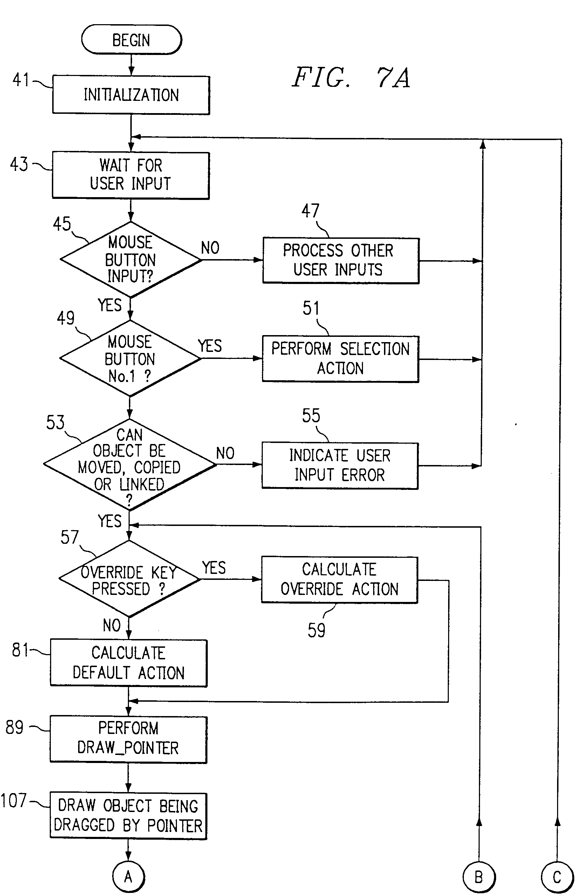

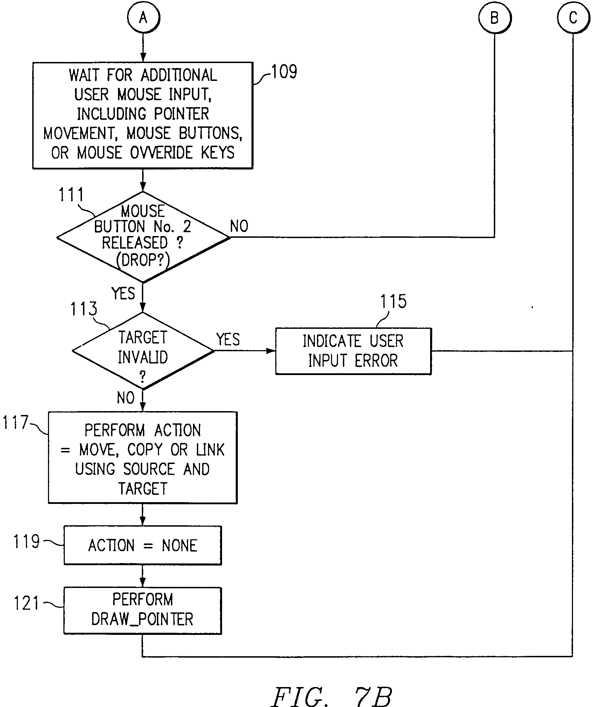

Referring now to Figures 7A and B, there is shown a flow chart of a preferred software implementation of the present invention. The system is initialized at block 41 and the user input is monitored at block 43. As shown at decision block 45, if there is user input but no mouse button input, then the system processes other user inputs at block 47 and returns to block 43 to await further user input. If, however, there is mouse button input, then, at decision block 49, the system tests whether mouse button one or two is pressed. If mouse button one is pressed, then the system performs a selection action at block 51. If mouse button number one is not pressed then, by default, mouse button number two is pressed, which indicates that the user desires to perform a direct manipulation operation.

Direct manipulation includes the move, copy, and link operations. Therefore, at decision block 53, the system tests whether the object can be moved, copied, or linked. If it can not, then, at block 55, a user input error is indicated at block 55 and the system returns to block 43 to monitor the input. If, however, the object can be moved, copied or linked, then, at decision block 57, the system tests whether an override key is pressed. If an override key is pressed, then at block 59, the system calculates the override action.

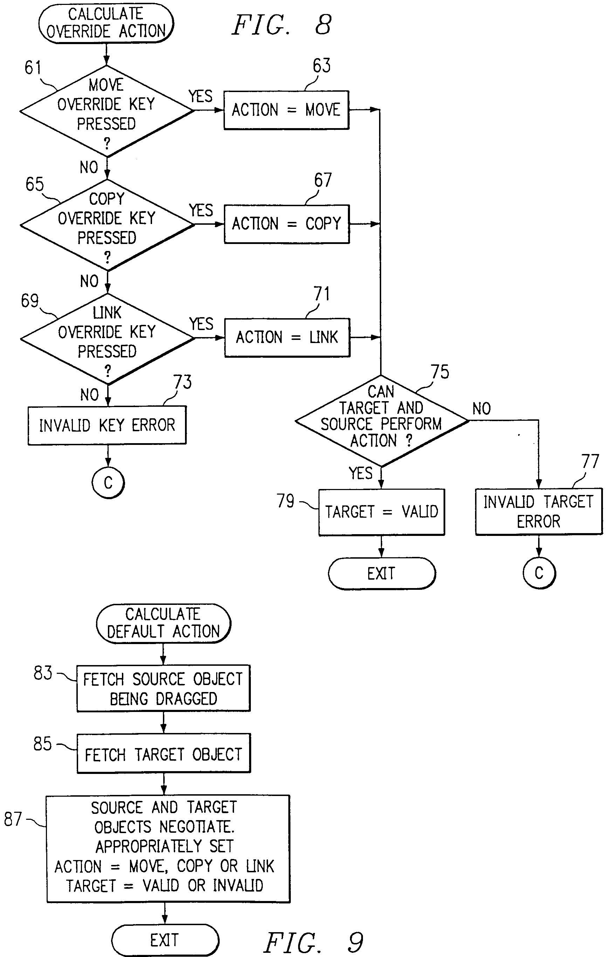

The calculate override action routine represented by block 59 is shown in-detail in Figure 8. Referring to Figure 8, the system tests at decision block 61 whether the move override key is pressed; if it is, then the action equals move, as shown, at block 63. If the move override key is not pressed, then, at decision block 65, the system tests whether the copy override key is pressed; if it is, then the action equals copy, at block 67. If the copy override key is not pressed, then, for the sake of good order, at decision block 69, the system tests whether the link override key is pressed. If it is, then the action equals link at block 71. However, if the link override key is not pressed then there is an error, which is indicated at block 73 and the system returns to monitor the input at block 43 and Figure 7A.

If the action is move, copy, or link, then at decision block 75, the system tests whether or not the target and source can perform the action. If the action can not be performed, then an invalid target error occurs at block 77, and the system returns to monitor the input at block 43. If, on the other hand, the action can be performed, the target equals valid, at block 79, and the system returns to the main routine in Figure 7A.

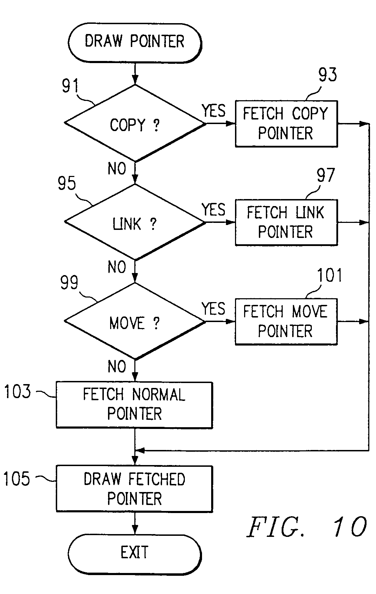

Returning to Figure 7A, if at decision block 57, no override key is pressed, then the system calculates the default action for the source and target objects at decision block 81. The calculate default action routine is shown in Figure 9 and, at block 83, the system fetches the source object being dragged and, at block 85, the target object. After the source and target object have been fetched, the source and target object negotiate at block 87 to set the action equal move, copy, or link, and the target valid or invalid.

Returning again to Figure 7A, after the default or override action has been calculated, then, at block 89, the system performs DRAW pointer routine, which is shown in detail at Figure 10.

Referring to Figure 10, the system tests at decision block 91 whether or not the action equals copy; if it does, then the system fetches the copy pointer at block 93. If the action does not equal copy, then the system tests whether or not the action equals link at decision block 95; if it is, then the system fetches the link pointer at block 97. If the action does not equal link, then the system tests whether or not the action equals move at decision block 99; if it is, the system fetches the move pointer at block 101. If the action is neither copy, link, or move, then, at block 103, the system fetches the "normal" pointer, which in the preferred embodiment is identical to the move pointer. After the appropriate pointer has been fetched, the fetched pointer is drawn at block 105.

Referring again to Figure 7A, after the appropriate pointer has been drawn, then, at block 107, the target object may be redrawn depending upon the wishes of the programmer. For example, additional visual feedback features may be provided.

Continuing in Figure 7B, at block 109, the system waits for additional user inputs including pointer movement, and actions of mouse buttons and override keys. The system tests at decision block at 111 whether or not mouse button number two is released. As long as mouse button number two is depressed, the system continues to wait for additional user inputs. If mouse button number two is released, which indicates a drop, then, at decision block 113 the system tests whether or not the target is invalid. If it is invalid, then the user input error is indicated at block 115 and the system returns to block 43 to monitor the input. If the target is not invalid, then the move copy or link action is performed at block 117. After the action has been performed, then, at block 119, action is set equal to none and, at block 121, the draw pointer routine, which is shown in detail in Figure 10, is invoked. Whereupon the system returns to block 43 to await further user input.

From the foregoing, those skilled in the art will see that the present invention overcomes many shortcoming of the prior art. The user is provided with immediate visual feedback during direct manipulation. This increased feedback enables the user to operate the system more easily and to avoid errors and mistakes.

While the invention has been particularly shown and described with reference to a preferred embodiment, those skilled in the art will understand that various changes in form and detail may be made without departing from the spirit and scope of the invention.

## Claims

1.　A method of performing a direct manipulation of a source object in a computer system, which comprises the steps of:
　　attaching a pointer to a source object;
　　dragging the source object, with the pointer attached thereto, to a target; and,
　　automatically indicating the action to be taken by the source object upon the target.

2.　The method as claimed in claim 1, wherein the action to be taken is indicated by the appearance of said pointer.

3.　The method as claimed in claim 2, wherein the action to be taken is indicated by the shape of said pointer.

4. The method as claimed in claim 1, including the step of:

overriding the indicated action to be taken by the source object upon the target.

5. The method as claimed in claim 4, including the step of:

automatically indicating the overriding action to be taken by the source object upon the target.

6. The method as claimed in claim 5, wherein the overriding action is indicated by the appearance of said pointer.

7. The method as claimed in claim 6, wherein the overriding action is indicated by the shape of said pointer.

8. A method as claimed in claim 1, including the steps of:

dragging the source object on the target; and,

automatically performing the indicated action.

FIG. 1

FIG. 2

FIG. 3

FIG. 4

FIG. 5

FIG. 6

*FIG. 7A*

BEGIN

41 — INITIALIZATION

43 — WAIT FOR USER INPUT

45 — MOUSE BUTTON INPUT?

NO → 47 PROCESS OTHER USER INPUTS

YES

49 — MOUSE BUTTON No.1 ?

YES → 51 PERFORM SELECTION ACTION

53 — CAN OBJECT BE MOVED, COPIED OR LINKED ?

NO → 55 INDICATE USER INPUT ERROR

YES

57 — OVERRIDE KEY PRESSED ?

YES → CALCULATE OVERRIDE ACTION 59

NO

81 — CALCULATE DEFAULT ACTION

89 — PERFORM DRAW_POINTER

107 — DRAW OBJECT BEING DRAGGED BY POINTER

A

B

C

WAIT FOR ADDITIONAL
USER MOUSE INPUT,
INCLUDING POINTER
MOVEMENT, MOUSE BUTTONS,
OR MOUSE OVVERIDE KEYS — 109

111 — MOUSE
BUTTON No. 2
RELEASED ?
(DROP?) — NO

YES

113 — TARGET
INVALID
? — YES

INDICATE USER
INPUT ERROR — 115

NO

117 — PERFORM ACTION
= MOVE, COPY OR LINK
USING SOURCE AND
TARGET

119 — ACTION = NONE

121 — PERFORM
DRAW_POINTER

*FIG. 7B*

**FIG. 8**

CALCULATE OVERRIDE ACTION

61 — MOVE OVERRIDE KEY PRESSED ?

YES → 63 — ACTION = MOVE

NO

65 — COPY OVERRIDE KEY PRESSED ?

YES → 67 — ACTION = COPY

NO

69 — LINK OVERRIDE KEY PRESSED ?

YES → 71 — ACTION = LINK

NO

73 — INVALID KEY ERROR

C

75 — CAN TARGET AND SOURCE PERFORM ACTION ?

NO → 77 — INVALID TARGET ERROR

C

YES

79 — TARGET = VALID

EXIT

**FIG. 9**

CALCULATE DEFAULT ACTION

83 — FETCH SOURCE OBJECT BEING DRAGGED

85 — FETCH TARGET OBJECT

87 — SOURCE AND TARGET OBJECTS NEGOTIATE. APPROPRIATELY SET ACTION = MOVE, COPY OR LINK TARGET = VALID OR INVALID

EXIT

FIG. 10